# FASCICULE DE BREVET EUROPEEN

(11) **EP 3 556 001 B1**
(45) Date de publication et mention de la délivrance du brevet: **07.12.2022**
(21) Numéro de dépôt: 17816825.8
(22) Date de dépôt: 15.12.2017
(51) Int. Cl.: H02M 3/156

(54) **CONVERTISSEUR DE TENSION HAUTE FRÉQUENCE CONTINUE DE TYPE BUCK QUASI-RÉSONANT**
QUASI-RESONANTER TIEFSETZTELLER FÜR KONTINUIERLICHE HOCHFREQUENZSPANNUNG
QUASI-RESONANT BUCK-TYPE CONVERTER OF CONTINUOUS HIGH-FREQUENCY VOLTAGE

(30) Priorité: 15.12.2016 FR 1662501
(43) Date de publication de la demande: 23.10.2019
(73) Titulaire: 3D Plus, 78530 Buc Cedex (FR)
(72) Inventeur: DUBUS, Patrick, 78720 Saint-Forget (FR); PERROT, Nicolas, 78280 Guyancourt (FR)
(74) Mandataire: Atout PI Laplace
(86) Numéro de dépôt international: PCT/EP2017/083094
(87) Numéro de publication internationale: WO 2018/109185

(56) Documents cités:
- US-A- 5 663 635
- US-A1- 2005 135 036
- US-A1- 2013 002 223
- US-A1- 2014 049 239
- KWANG-HWA LIU ET AL: "ZERO-VOLTAGE SWITCHING TECHNIQUE IN DC/DC CONVERTERS", IEEE TRANSACTIONS ON POWER ELECTRONICS, INSTITUTE OF ELECTRICAL AND ELECTRONICS ENGINEERS, USA, vol. 5, no. 3, 1 juillet 1990 (1990-07-01) , pages 293-304, XP000137426, ISSN: 0885-8993, DOI: 10.1109/63.56520

## Description

Le domaine de la présente invention est celui des alimentations à découpage. Plus particulièrement, l'invention porte sur un convertisseur de tension continu-continu (DC/DC) non isolé de type Buck quasi-résonant, notamment pour des applications régulateur de point de charge. La conversion de tension continue est utilisée dans de nombreux domaines technologiques allant de la nécessité à convertir la tension d'alimentation de dispositifs, tel que la conversion de la tension délivrée par une batterie d'ordinateur portable vers un processeur; à des applications évoluant dans des environnements beaucoup plus critiques tel que celui du spatial.

De l'art antérieur pertinent pour l'invention est
- US 2013/002223 A1
- KWANG-HWA LIU ET AL: "ZERO-VOLTAGE SWITCHING TECHNIQUE IN DC/DC CONVERTERS", IEEE TRANSACTIONS ON POWER ELECTRONICS, INSTITUTE OF ELECTRICAL AND ELECTRONICS ENGINEERS, USA, vol. 5, no. 3, 1 juillet 1990
- US 5 663 635 A.

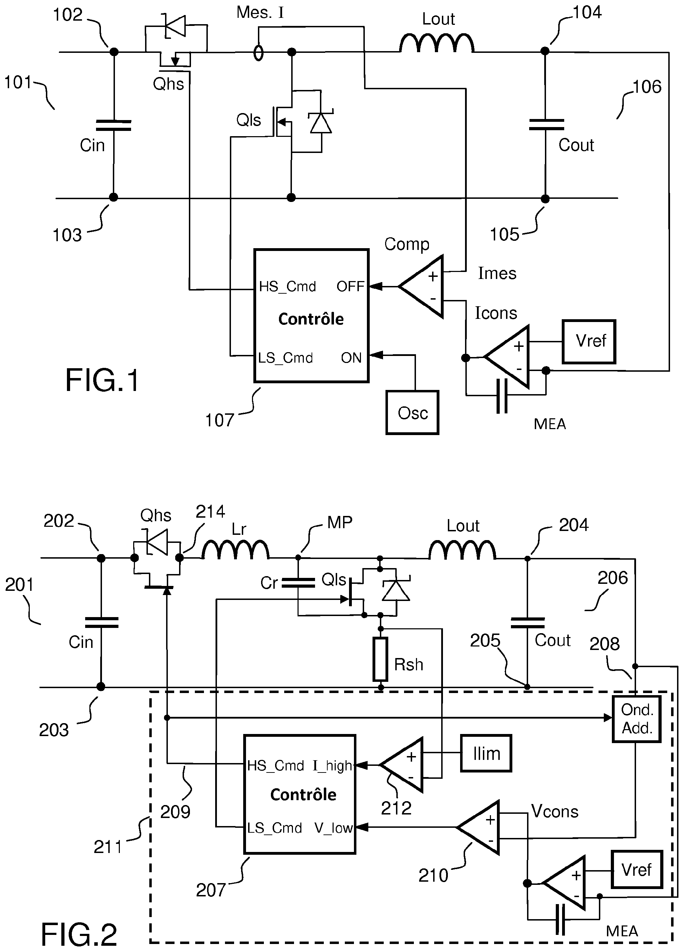

De manière générale, la fonction d'un convertisseur de tension DC/DC en sa sortie est soit d'augmenter une tension présente en son entrée, soit de la baisser afin d'alimenter le dispositif se trouvant en aval. La figure 1. représente un convertisseur Buck selon l'art antérieur. Ce convertisseur comprend deux interrupteurs commandés en tension **Qhs** et **Qls** de type MOSFET (de l'anglais, « Métal Oxide Semiconductor Field Effect Transistor »), un circuit de régulation en mode contrôle courant qui permet de réguler le niveau de tension de sortie **Vout** du convertisseur en fonction du signal du courant **Mes. I** circulant dans le premier interrupteur **Qhs.** Ce circuit de régulation comprend :
- un circuit de contrôle **107** qui peut être réalisé sous la forme d'un circuit logique programmé ou câblé, tel qu'avec des bascules et qui permet de contrôler l'ouverture ou la fermeture des interrupteurs;
- un amplificateur d'erreur **MEA** qui génère un signal de consigne **Icons** proportionnel à une différence entre le niveau de tension de sortie du convertisseur et une tension de référence;
- un comparateur **Comp** permettant de comparer le signal du courant circulant dans le premier interrupteur et le signal de consigne.

Le convertisseur comprend également en sortie un filtre passe-bas constitué d'une inductance de sortie **Lout** et d'une capacité de sortie **Cout.** Un oscillateur **Osc** relié en entrée du circuit de contrôle permet, sur le front montant de ses impulsions, de commander le premier interrupteur. Le convertisseur Buck comporte deux régimes distincts dans sa période de fonctionnement. Chaque régime est caractérisé par l'état premier interrupteur **Qhs.** Un régime dit «ON» est obtenu pour un état fermé du premier interrupteur **Qhs,** tandis qu'un régime dit «OFF» correspond à un état ouvert du premier interrupteur.

L'oscillateur est connecté à l'entrée **ON** du circuit de contrôle **107** et permet de démarrer une période de fonctionnement, sur les fronts montants de ses impulsions, en générant la commande de fermeture du premier interrupteur **HS_Cmd.** Cette commande de fermeture débute le régime « ON » du convertisseur. L'oscillateur peut être réalisé au moyen d'un circuit analogique ou d'un résonateur ou d'un quartz et fixe la fréquence de fonctionnement du convertisseur.

Dans une première phase (régime «ON»), le premier interrupteur **Qhs** est fermé. Le courant augmente rapidement jusqu'à atteindre la valeur de celui qui circule dans l'inductance de sortie, puis il augmente plus lentement jusqu'à atteindre se valeur maximale à la fin de cette première phase. Le courant dans l'inductance de sortie croît et est égal au courant dans **Qhs.** Durant toute cette phase, le deuxième interrupteur **Qls** est ouvert (la commande d'ouverture a eu lieu juste avant de fermer l'interrupteur **Qhs**). La commande de fermeture de Qhs et la commande d'ouverture de Qls se font avec des pertes qui augmentent avec la fréquence de fonctionnement du convertisseur.

Dans une deuxième phase (régime «OFF»), l'interrupteur **Qhs** reçoit une commande d'ouverture puis l'interrupteur **Qls** reçoit une commande de fermeture. Le courant dans l'inductance de sortie est égal au courant dans Qls et décroît. La commande d'ouverture de Qhs et, dans une moindre mesure, la commande de fermeture de Qls se fait avec des pertes et augmente avec la fréquence de fonctionnement du convertisseur.

La régulation de la tension de sortie convertie est linéaire et comprend deux boucles d'asservissement imbriquées. La première boucle est externe et réalisée avec l'amplificateur d'erreur **MEA** qui permet de générer un signal de consigne **Icons** image d'un courant fonction de (par exemple à) la différence entre une tension de référence **Vref,** connectée à sa première entrée, et le niveau de tension converti connecté à sa deuxième entrée. Cette première boucle contrôle la valeur moyenne du niveau de tension converti. La deuxième boucle est interne et réalisée avec le comparateur **Comp** dont la première entrée est présentée au signal de consigne **Icons** et dont la deuxième entrée est présentée au signal **Imes** image du courant circulant dans le premier interrupteur. Cette deuxième boucle permet un contrôle sur la valeur maximale du courant. La commande d'ouverture de **Qhs** se produit lorsque le signal image du courant **Mes. I** atteint la valeur du signal image **Icons.**

Dans ce type de convertisseur, les éléments réactifs sont volumineux.

Une solution connue visant à réduire l'encombrement des éléments réactifs, et par conséquent celui du convertisseur, consiste à augmenter la fréquence de commutation des interrupteurs. Néanmoins, cette augmentation de la fréquence de commutation augmente les pertes de commutations et engendre des problèmes d'incompatibilités électromagnétiques. La vitesse de la régulation du niveau de tension est un facteur important pour ce type de convertisseur car elle permet de délivrer une tension constante à la charge quel que soit les appels de courant que celle-ci impose (appel important et rapide pour des charges numérique de dernière génération). Avec le principe de régulation mise en œuvre avec l'état de l'art actuel, la vitesse de régulation est limitée par la vitesse de l'amplificateur d'erreur et par le respect des marges de stabilités pour avoir un contrôle de la tension de sortie stable. Cette stabilité peut aussi être remise en cause par la nature de la charge de sortie (choix de l'utilisateur). Pour avoir un système stable, la vitesse maximale de régulation est fixée au moment de la conception et elle ne peut être amélioré par des choix décidés au niveau de l'utilisateur (ajout d'une capacité de sortie, par exemple). Ce type de régulation conduit à faire des compromis qui doivent être compensés par l'augmentation de la capacité de sortie et ne permettent pas de minimiser la taille du convertisseur.

L'invention vise à obtenir une régulation rapide du niveau de tension de sortie du convertisseur, qui permette de travailler à haute fréquence afin de miniaturiser les composants réactifs sans avoir besoin de surdimensionner ceux-ci et de laisser la possibilité à l'utilisateur d'améliorer encore les performances dynamiques via l'ajout de solutions de filtrage en sortie.

Conformément à l'invention, la régulation du niveau de tension de sortie s'effectue grâce à un circuit non linéaire disposant ainsi d'un comportement dynamique rapide. Ce type de régulation est particulièrement bien adapté à un convertisseur ayant des transistors présentant des phases de commutations fermées de durée constante COT (de l'anglais, « Constant On Time »). Un élément de cette régulation est l'ajout d'une ondulation de tension sur le niveau de tension de sortie du convertisseur. Cette ondulation de tension additionnelle, croissante ou décroissante en fonction de l'état de fermeture ou d'ouverture du premier interrupteur, garantit un fonctionnement stable de la régulation face à des perturbations de tension ou à la nature de la charge. Les transistors permettant une fréquence de travail élevée peuvent en particulier être des HEMTs (de l'anglais, « High Electron Mobility Transistors) sur un substrat GaN (nitrure de gallium). Finalement le convertisseur dispose d'un circuit de protection contre les surcharges qui permet d'arrêter la prochaine itération de transfert de charges lorsque le courant circulant dans le transistor atteint une valeur critique prédéterminée.

Un objet de l'invention est un convertisseur de tension continue de type Buck quasi-résonant selon la revendication 1.

Selon des modes de réalisation particuliers d'un tel convertisseur de tension
- Ledit circuit de régulation peut comprendre en outre : un circuit de contrôle ayant une sortie apte à délivrer ledit signal d'activation; et un circuit comparateur ayant une sortie apte à délivrer ledit résultat de ladite comparaison, ladite sortie étant connectée à une première entrée dudit circuit de contrôle.
- Ledit circuit de régulation peut comprendre en outre : un circuit d'ajout d'ondulation configuré pour délivrer ledit niveau de tension converti auquel a été additionné ladite ondulation de tension, le circuit d'ajout d'ondulation ayant une première entrée connectée à ladite première borne de la porte de sortie dudit convertisseur, une deuxième entrée connectée à une sortie dudit circuit de contrôle, et une sortie connectée à une première entrée dudit circuit comparateur ; et un amplificateur d'erreur apte à délivrer ledit signal de consigne, ledit amplificateur ayant une première entrée connectée à ladite première borne de la porte de sortie dudit convertisseur, une deuxième entrée configurée pour recevoir ladite tension de référence, et une sortie connectée à une deuxième entrée dudit circuit comparateur.
- Ledit circuit de contrôle peut être en outre configuré pour piloter : la fermeture ou l'ouverture dudit premier interrupteur; la génération, sur ladite deuxième entrée dudit circuit d'ajout d'ondulation, de ladite tension croissante ou décroissante.
- Ledit convertisseur peut comprendre en outre : une inductance de résonance connectée en série avec ledit premier interrupteur, ayant une première et une deuxième borne, ladite première borne étant reliée audit premier interrupteur; une capacité de résonance, ayant une première et une deuxième borne, ladite première borne étant reliée à la deuxième borne de l'inductance de résonance; un deuxième interrupteur relié d'une part à ladite première borne de la capacité de résonance et d'autre part à ladite deuxième borne de la capacité de résonance.
- Ledit convertisseur peut comprendre également un filtre passe-bas de sortie.
- Ledit circuit de régulation peut comprendre un circuit de protection contre les surcharges comprenant un circuit de mesure d'un courant circulant dans ledit deuxième interrupteur; et un circuit comparateur présentant : une première entrée pour un signal d'un courant de limitation prédéterminé; une deuxième entrée connectée audit circuit de mesure du courant circulant dans ledit deuxième interrupteur; ledit circuit de protection contre les surcharges présentant en outre une sortie connectée à une deuxième entrée dudit circuit de contrôle; ledit circuit de contrôle étant configuré pour délivrer, sur sa sortie, un signal dépendant d'une comparaison entre ladite première entrée et ladite deuxième entrée et pilotant l'ouverture dudit premier interrupteur tant que ledit signal représentatif du courant circulant dans ledit deuxième interrupteur est au minimum égal audit signal du courant de limitation prédéterminé. Plus particulièrement, ledit circuit de mesure de courant peut comprendre une résistance reliée entre la deuxième borne de la capacité de résonance et ladite ligne de masse.
- Ledit convertisseur peut comprendre également une diode de roue libre montée en parallèle audit premier interrupteur, ayant une cathode connectée à la première borne de la première porte, ladite durée prédéfinie étant choisie pour ouvrir ledit premier interrupteur lorsque le courant traversant ledit premier interrupteur circule dans ladite diode de roue libre.
- Ledit circuit de contrôle peut être configuré pour ouvrir ledit premier interrupteur pour une durée minimale prédéterminée.
- Ledit premier interrupteur et ledit deuxième interrupteur peuvent présenter un temps de commutation inférieur ou égal à 100 ns et de préférence intérieur ou égal à 10 ns. Plus particulièrement, ledit premier interrupteur et ledit deuxième interrupteur peuvent être réalisés en technologie GaN.

Un autre objet de l'invention est un procédé de conversion d'une tension au moyen d'un convertisseur de tension continue de type Buck quasi-résonant selon la revendication 11.

Selon un mode de réalisation d'un tel procédé, ledit convertisseur de tension continue de type Buck quasi-résonant comprend également une inductance de résonance connectée en série avec ledit premier interrupteur, ayant une première et une deuxième borne, ladite première borne étant reliée audit premier interrupteur; une capacité de résonance, ayant une première et une deuxième borne, ladite première borne étant reliée à la deuxième borne de l'inductance de résonance; un deuxième interrupteur relié d'une part à ladite première borne de la capacité de résonance et d'autre part à ladite deuxième borne de la capacité de résonance ; le procédé comprenant en outre des étapes de : génération d'un signal de fermeture du deuxième interrupteur lorsque la tension entre la deuxième borne (MP) de l'inductance de résonance et la ligne de masse devient négative ; et génération d'un signal d'ouverture du deuxième interrupteur en correspondance de la génération du signal d'activation pilotant la fermeture dudit premier interrupteur.

L'invention est définie par les revendications indépendantes. Des modes de réalisation préférés sont décrits par les revendications dépendantes.

L'invention sera mieux comprise et d'autres caractéristiques et avantages apparaîtront mieux à la lecture de la description qui suit, donnée à titre non limitatif, et grâce aux figures annexées parmi lesquelles :
- la figure 1, déjà décrite, illustre le schéma électrique d'un convertisseur de tension Buck selon l'art antérieur;
- la figure 2 illustre le schéma électrique d'un convertisseur Buck quasi-résonant selon un mode de réalisation de l'invention;
- la figure 3 illustre un mode de réalisation du circuit d'ajout d'ondulation du convertisseur de la figure 2;
- la figure 4 illustre les chronogrammes du principe de la régulation de la tension de sortie convertie du convertisseur de la figure 2;
- la figure 5 illustre les chronogrammes du principe de la protection contre les surcharges du convertisseur de la figure 2.
- la figure 6 illustre un schéma électrique d'un convertisseur Buck quasi-résonant selon un deuxième mode de réalisation de l'invention

Dans la description suivante, les termes interrupteur et transistor sont utilisés de manière interchangeable. De même, la tension de sortie du convertisseur sera tantôt identifiée comme étant **Vout,** tantôt comme étant le niveau de tension converti.

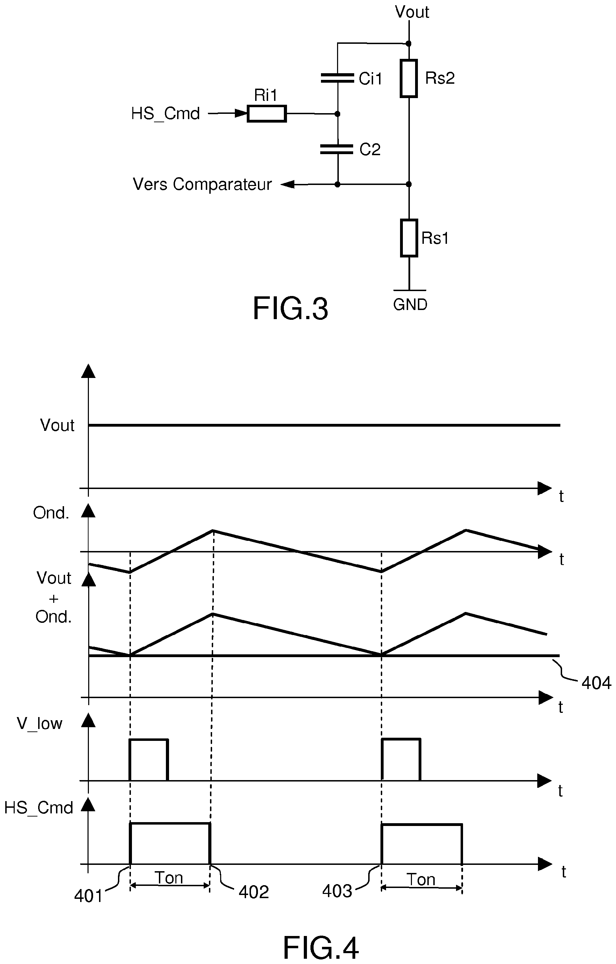

La figure 2 illustre un convertisseur de tension Buck selon un mode de réalisation de l'invention. Dans ce mode de réalisation, seule la phase « ON » du convertisseur a une durée constante qui est définie au préalable. Cette dernière qui correspond à la durée de fermeture du premier interrupteur **Qhs** est calculée pour obtenir une commutation douce, c'est-à-dire, à la fermeture, une commutation qui se produit à zéro de courant du fait de la présence de la self de résonance Lr en série, à l'ouverture, une commutation qui se produit lorsque le courant dans l'interrupteur est négatf et, de ce fait, circule dans la diode située en parallèle. Le convertisseur présente une porte d'entrée **201** apte à recevoir un niveau tension à convertir et une porte de sortie **206** permettant de fournir un niveau de tension converti. La porte d'entrée **201** comprend une première et une deuxième borne, respectivement **202** et **203.** La porte de sortie **206** comprend également une première et une deuxième borne, respectivement **204** et **205.** Une ligne de masse est connectée entre la deuxième borne **203** et la deuxième borne **205.** Connectée en parallèle avec la porte d'entrée **201** du convertisseur, entre la première borne **202** et la deuxième borne **203,** une capacité **Cin** permet de filtrer le niveau de tension à convertir. Un premier interrupteur **Qhs** constitué par un HEMT est connecté en série d'une part à la première borne **202** de la porte d'entrée et d'autre part à la première borne **214** d'une inductance de résonance **Lr.** Selon un mode de réalisation, l'interrupteur **Qhs** est connecté en parallèle avec une diode de roue libre dont la cathode est connectée à la borne **202.** Le HEMT est selon un mode de réalisation préféré en technologie GaN. Le choix du GaN est justifié par sa robustesse aux radiations, sa faible résistance de contact et par sa vitesse de commutations rapide qui dans un système à commutation douce ne créé pas d'inconvénients. Avantageusement, le transistor permet un temps de commutation de quelques ns à quelques dizaines de ns, de préférence inférieur ou égal à 100 ns voire à 10 ns. La deuxième borne de l'inductance de résonance **Lr** est reliée à la première borne d'une capacité de résonance **Cr** et au point de mesure **MP.** Un deuxième interrupteur **Qls** est connecté entre la première et la deuxième borne de la capacité de résonance **Cr** (une solution alternative consiste à connecter la seconde borne de la capacité Cr à la masse). Selon un mode de réalisation privilégié, une diode de roue libre dont la cathode est reliée au point de mesure **MP** est reliée en parallèle avec l'interrupteur **Qls.** La présence de cette diode n'est toutefois pas indispensable. Selon un mode de réalisation, une résistance **Rsh** permet une mesure du courant circulant dans le deuxième interrupteur **Qls.** La résistance est connectée entre la deuxième borne de la capacité de résonance **Cr** et la ligne de masse. Le filtre passe-bas de sortie comprend, une inductance **Lout** reliée entre le point de mesure **MP** et la première borne **204** et une capacité **Cout** reliée entre la première borne **204** et la deuxième borne **205.** Relié à la porte de sortie du convertisseur, un circuit de régulation **211** comprenant un circuit d'ajout d'ondulation **Ond. Add.,** un amplificateur d'erreur **MEA,** un comparateur **210,** et un circuit de contrôle **207** permet de :
- générer une ondulation de tension, croissante pour un état fermé du premier interrupteur **Qhs** et décroissante pour un état ouvert du premier interrupteur **Qhs;**
- générer un signal de consigne proportionnel à une différence entre le niveau moyen de tension converti et une tension de référence **Vref;**
- effectuer une première comparaison entre le signal de consigne **Vcons** et le niveau de tension converti auquel a été additionné l'ondulation de tension ; et
- en fonction du résultat de la première comparaison, générer ou pas sur sa sortie un signal d'activation pilotant la fermeture dudit premier interrupteur pendant une durée **TON** prédéfinie représentée sur la figure 4. Plus précisément, dans le mode de réalisation de la figure 2, le signal d'activation pilote la fermeture du premier interrupteur pour un niveau de tension converti auquel a été additionné l'ondulation de tension inférieur ou égal à la tension de consigne.

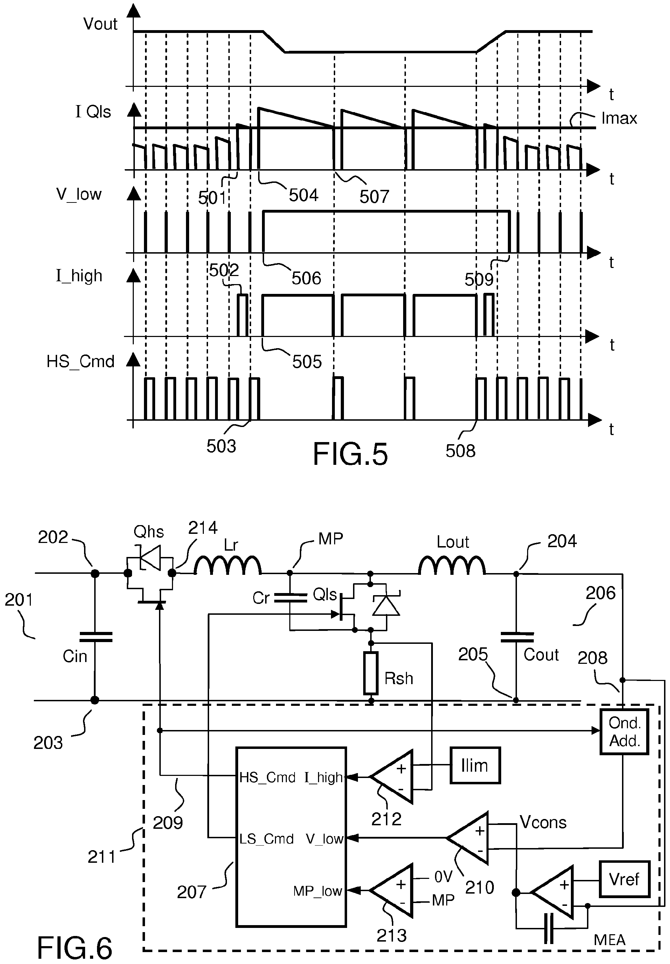

Une première entrée du circuit d'ajout d'ondulation **Ond.Add.** est reliée à la première borne **204** de la porte de sortie **206** du convertisseur, tandis que la deuxième entrée est reliée à la sortie du circuit de contrôle **207** qui est apte également à délivrer le signal d'activation du premier interrupteur **Qhs.** Le schéma électrique du circuit d'ajout d'ondulation est représenté sur la figure 3. L'amplificateur d'erreur **MEA** permettant de générer le signal de consigne **Vcons** présente une première entrée reliée à la tension de référence **Vref** et une deuxième entrée reliée à la première borne **204** de la porte de sortie **206** du convertisseur. Le comparateur **210** permettant d'effectuer la première comparaison présente une première entrée reliée à la sortie de l'amplificateur d'erreur **MEA** et une deuxième entrée reliée à la sortie du circuit d'ajout d'ondulation **Ond. Add..** La sortie du comparateur **210,** reliée à la première entrée du circuit de contrôle **207,** fournit un signal binaire représentatif du résultat de la première comparaison permettant de générer le signal d'activation pilotant la fermeture du premier interrupteur lorsque le signal décroissant représentant l'addition du niveau de tension converti et de l'ondulation devient égal au signal de consigne **Vcons.** Dans un mode de réalisation, le circuit de contrôle **207** est un circuit programmable tel qu'un FPGA (de l'anglais, « Field Programmable Gate Array »). Cette régulation permet de contrôler la tension de sortie de manière très rapide car elle est basée sur un comparateur utilisé dans un mode de contrôle inconditionnellement stable. Cette vitesse de régulation maximale, permet de réaliser un convertisseur possédant de très bonnes performances dynamiques. La performance de régulation statique est assuré par le MEA qui vient modifier la consigne appliquée au comparateur afin d'avoir une tension de sortie moyenne parfaitement régulée. La protection contre les surcharges du circuit de régulation **211** comprend un comparateur **212** présentant une première entrée pour un signal d'un courant de limitation **llim** prédéterminé et une deuxième entrée reliée au circuit de mesure du courant circulant dans le deuxième interrupteur **Qls.** Le premier interrupteur **Qhs** ne peut être commandé tant que le courant **I Qls** est supérieur à **llim,** limitant ainsi le courant de sortie maximum du convertisseur. Le courant de sortie maximum du convertisseur est situé en pratique à une valeur **Ipic** (supérieure à supérieur à **llim)** qui dépend du **Ton** constant. La figure 5 présente les chronogrammes de fonctionnement de la protection contre les surcharges. En outre, le circuit de contrôle **207** est configuré pour ouvrir le premier interrupteur **Qhs** pendant une durée minimale prédéterminée ce qui permet de limiter la fréquence maximale de fonctionnement du convertisseur durant les phases transitoires.

La figure 6 illustre le schéma électrique d'un convertisseur Buck quasi-résonant selon un deuxième mode de réalisation de l'invention. Le circuit de régulation **211** comprend un circuit comparateur de tension **213** configuré pour générer un signal d'activation **LS_cmd** du deuxième interrupteur **Qls** lorsque la tension entre la deuxième borne **MP** de l'inductance de résonance et la ligne de masse devient négative, et pour générer un signal d'ouverture du deuxième interrupteur **Qls** en correspondance de la génération du signal d'activation **HS_cmd** pilotant la fermeture du premier interrupteur **Qhs.** Le circuit de contrôle **207** comprend ainsi une entrée supplémentaire **MP_low** par rapport au mode de réalisation illustré par la figure 2.

Sur la figure 3 est représenté le schéma électrique d'un mode de réalisation particulier du circuit d'ajout d'ondulation représenté par **Ond.Add.** sur la figure 2. Le circuit d'ajout d'ondulation permet d'une part de générer une ondulation de tension, croissante ou décroissante en fonction de l'état de fermeture ou ouverture du premier interrupteur **Qhs,** et d'autre part d'additionner l'ondulation ainsi générée au niveau de tension converti. Relié entre la tension de sortie convertie **Vout** et la masse se trouve un pont diviseur de tension comprenant les résistances **Rs1** et **Rs2. Rs2** présente une première borne représentant sa première entrée qui est reliée à la tension de sortie **Vout** et une deuxième borne reliée à la première borne de **Rs1.** La deuxième borne de **Rs1** est reliée à la masse. Le point milieu du pont diviseur de tension représente la sortie du circuit d'ajout d'ondulation qui est reliée à la première entrée du circuit comparateur. Deux capacités **Ci1** et **C2** sont connectées en série. La première borne de la capacité **Ci1** est également connectée à la tension de sortie convertie **Vout** et sa deuxième borne est connectée d'une part à la première borne de la capacité **C2** et d'autre part à une première borne d'une résistance **Ri1.** La deuxième borne de **Ri1** est connectée à la sortie du circuit de contrôle, tandis que la deuxième borne de **C2** est également connectée au point milieu du pont diviseur de tension.
Dans un autre mode de réalisation le circuit d'ajout d'ondulation peut être intégré à un circuit dédié avec le circuit de contrôle.

La figure 4 représente des chronogrammes illustrant le principe de la régulation du niveau de tension converti **Vout** sensiblement constant. Pour éviter que le niveau de tension converti ne soit trop sensible aux perturbations, il faut une différence minimale de variation entre la valeur maximale et la valeur minimale du niveau de tension converti. Le signal **Ond.** représente l'ondulation de tension croissante ou décroissante, créée par le circuit d'ajout d'ondulation, en fonction de l'état de fermeture ou ouverture du premier interrupteur **Qhs.** L'ondulation est générée puis additionnée au niveau de tension converti par le circuit représenté sur la figure 3. Le résultat de l'addition de l'ondulation **Ond.** au niveau de tension converti est représenté par le signal **Vout + Ond..** Ce dernier représente une tension croissante ou décroissante en fonction de l'état de fermeture ou ouverture du premier interrupteur **Qhs** qui comprend une composante DC égale à **Vout.** Avant l'instant **401,** le signal **Vout + Ond** décroît et devient égal au signal de consigne **404.** Cette égalité entre le signal **Vout + Ond** et le signal de consigne **404** génère le passage à l'état haut du signal **Vlow** en sortie du comparateur. Le signal **Vlow** est transmis sur la première entrée du circuit de contrôle vers sa logique de contrôle interne générant le signal d'activation **HS_Cmd** pilotant la fermeture du premier interrupteur. Le signal d'activation **HS_Cmd** reste à l'état haut pendant la durée **Ton** pour laquelle le signal **Vout + Ond** croît. À l'instant **402, HS_Cmd** passe à l'état bas et le signal **Vout + Ond** qui est maximal commence à décroître. Le signal converti **Vout + Ond** décroît jusqu'à l'instant **403** où il redevient égal au signal de consigne **404** qui entraîne un nouveau cycle d'activation du premier interrupteur.

La figure 5 illustre les chronogrammes montrant le principe de la régulation de la protection contre les surcharges selon le mode de réalisation privilégié de la figure 2. Le chronogramme de **Vout** représente le niveau de tension converti. Jusqu'à l'instant **501** la fonction de protection contre les surcharges n'est pas effective. En effet le courant **I Qls** reste inférieur à la valeur de limitation autorisée **Ilim.** À l'instant **501,** le courant **I Qls** atteint brièvement la valeur **Ilim,** ce qui entraine le passage à l'état haut **502** bref de **I_high.** Le dépassement de **Ilim** par **I Qls** à l'instant **501** n'est pas suffisamment important en amplitude et en temps pour interdire la conduction de **HS_Cmd** à l'instant **503.** En revanche à l'instant **504,** le dépassement de **I Qls** du courant **Ilim** est important en amplitude et en temps. Ceci entraîne le passage à l'état haut de **I high** à l'instant **505** et interdit le passage à l'état haut de **HS_Cmd.** À l'instant **506** le niveau de tension converti **Vout** n'ayant pas reçu de transfert de charges à cause de l'état bas de **HS_Cmd** décroit, ce qui entraîne le passage à l'état haut de **V_low.** À l'instant **507,** le courant I **Qls** a suffisamment décru pour autoriser le passage à l'état haut de **HS_Cmd.** Le niveau de tension converti **Vout** étant toujours trop bas, **V_low** reste à un état haut. À l'instant **507** une autre commande de passage à l'état haut de **HS_Cmd** est autorisée. Lorsque la surcharge de sortie diminue (avant instant **509**)**,** le courant décroit, le signal **I_high** retombe à zéro et la tension de sortie **Vout** croît jusqu'à son niveau de référence à l'instant **509,** entrainant le passage à l'état bas de **Vlow** traduisant la fin de la période de fonctionnement en surcharge. En outre, le circuit de contrôle **207** représenté sur la figure 2. est configuré pour:
- ouvrir le deuxième interrupteur **Qls** lorsque la tension entre le point de mesure **MP** et la ligne de masse devient négative, ceci étant une indication de la conduction imminente de la diode de roue libre en parallèle avec **Qls;**
- fermer le deuxième interrupteur **Qls** lorsque **Vlow** passe à l'état haut, ceci étant une indication du passage possible à l'état fermé (« ON ») du premier interrupteur **Qhs.**

Le circuit de mesure de courant selon un mode de réalisation comprend un capteur à effet Hall. Dans un autre mode de réalisation, les transistors GaN sont remplacés par des transistors développés avec des matériaux lll-V et de préférences à grand gap. L'ensemble des fonctions du circuit de régulation peuvent être réalisées et intégrées dans un circuit dédié tel qu'un ASIC (de l'anglais « Application Specific Integrated Circuit »). Les convertisseurs de l'art antérieur offrent typiquement un rendement de l'ordre de 90%. À de tels niveaux de performances les gains en rendement requièrent un effort important. Néanmoins, le convertisseur de l'objet de l'invention offre une amélioration considérable des performances avec un rendement de 95%.

## Revendications

1. Convertisseur de tension continue de type Buck quasi-résonant comprenant une porte d'entrée (201) ayant une première borne (202) apte à recevoir un niveau de tension à convertir, une porte de sortie (206) ayant une première borne (204) apte à fournir un niveau de tension convertie, une ligne de masse connectant une deuxième borne (203) de ladite porte d'entrée à une deuxième borne (205) de ladite porte de sortie, un premier interrupteur (Qhs) connecté à ladite première borne de la porte d'entrée et un circuit de régulation (211) présentant une borne d'entrée (208) connectée à ladite première borne de la porte de sortie du convertisseur et une borne de sortie (209) connectée à une borne de commande dudit premier interrupteur, ledit convertisseur comprenant en outre une inductance de résonance (Lr) connectée en série avec ledit premier interrupteur, ayant une première (214) et une deuxième borne, ladite première borne étant reliée audit premier interrupteur, une capacité de résonance (Cr), ayant une première et une deuxième borne, ladite première borne étant reliée à la deuxième borne (MP) de l'inductance de résonance, un deuxième interrupteur (Qls) relié d'une part à ladite première borne de la capacité de résonance et d'autre part à ladite deuxième borne de la capacité de résonance, ledit circuit de régulation étant configuré pour :
- générer une ondulation de tension (Ond.), croissante pour un état fermé du premier interrupteur (Qhs) ou décroissante pour un état ouvert du premier interrupteur (Qhs) ;
- générer un signal de consigne (Vcons) proportionnel à une différence entre un niveau moyen de tension convertie et une tension de référence (Vref) ;
- effectuer une première comparaison (210) entre ledit signal de consigne et ledit niveau de tension convertie auquel a été additionné ladite ondulation de tension ; et
- si le niveau de tension convertie auquel a été additionné ladite ondulation de tension est inférieur ou égal au signal de consigne (Vcons), générer sur sa sortie un signal d'activation (HS_Cmd) pilotant la fermeture dudit premier interrupteur pendant une durée prédéfinie (Ton)
**caractérisé en ce que** ledit circuit de régulation comprend un circuit comparateur de tension (213) configuré pour générer un signal d'activation (LS_cmd) du deuxième interrupteur (Qls) lorsque la tension entre la deuxième borne (MP) de l'inductance de résonance et la ligne de masse devient négative, et pour générer un signal d'ouverture du deuxième interrupteur (Qls) en correspondance de la génération du signal d'activation (HS_cmd) pilotant la fermeture dudit premier interrupteur.

2. Convertisseur de tension selon la revendication 1, dans lequel :
- ledit circuit de régulation (211) comprend en outre :
- un circuit de contrôle (207) ayant une sortie apte à délivrer ledit signal d'activation; et
- un circuit comparateur ayant une sortie apte à délivrer ledit résultat de ladite comparaison, ladite sortie étant connectée à une première entrée dudit circuit de contrôle;
- ledit circuit de régulation comprend en outre :
- un circuit d'ajout d'ondulation (Ond.Add.) configuré pour délivrer ledit niveau de tension converti auquel a été additionné ladite ondulation de tension, le circuit d'ajout d'ondulation ayant une première entrée (208) connectée à ladite première borne de la porte de sortie dudit convertisseur, une deuxième entrée connectée à une sortie dudit circuit de contrôle, et une sortie connectée à une première entrée dudit circuit comparateur (210);
- un amplificateur d'erreur (MEA) apte à délivrer ledit signal de consigne, ledit amplificateur ayant une première entrée connectée à ladite première borne de la porte de sortie dudit convertisseur, une deuxième entrée configurée pour recevoir ladite tension de référence, et une sortie connectée à une deuxième entrée dudit circuit comparateur;
- ledit circuit de contrôle est en outre configuré pour piloter :
- la fermeture ou l'ouverture dudit premier interrupteur;
- la génération, sur ladite deuxième entrée dudit circuit d'ajout d'ondulation, de ladite tension (Ond.) croissante ou décroissante.

3. Convertisseur de tension selon une des revendications précédentes, comprenant également un filtre passe-bas de sortie.

4. Convertisseur de tension selon l'une des revendications précédentes, dans lequel ledit circuit de régulation comprend un circuit de protection contre les surcharges comprenant un circuit de mesure d'un courant circulant dans ledit deuxième interrupteur; et un circuit comparateur (212) présentant :
- une première entrée pour un signal d'un courant de limitation (Ilim) prédéterminé;
- une deuxième entrée connectée audit circuit de mesure du courant circulant dans ledit deuxième interrupteur;
ledit circuit de protection contre les surcharges présentant en outre une sortie connectée à une deuxième entrée dudit circuit de contrôle; ledit circuit de contrôle étant configuré pour délivrer, sur sa sortie, un signal (I_high) dépendant d'une comparaison entre ladite première entrée et ladite deuxième entrée et pilotant l'ouverture dudit premier interrupteur tant que ledit signal représentatif du courant circulant dans ledit deuxième interrupteur est au minimum égal audit signal du courant de limitation prédéterminé.

5. Convertisseur de tension selon la revendication 4, dans lequel ledit circuit de mesure de courant comprend une résistance (Rsh) reliée entre la deuxième borne de la capacité de résonance et ladite ligne de masse.

6. Convertisseur de tension selon une des revendications précédentes, comprenant une diode de roue libre montée en parallèle audit premier interrupteur, ayant une cathode connectée à la première borne de la première porte, dans lequel ladite durée prédéfinie (Ton) est choisie pour ouvrir ledit premier interrupteur lorsque le courant traversant ledit premier interrupteur circule dans ladite diode de roue libre.

7. Convertisseur de tension selon une des revendications 2, 4 et 5, dans lequel ledit circuit de contrôle est configuré pour ouvrir ledit premier interrupteur pour une durée minimale prédéterminée afin de limiter la fréquence de fonctionnement maximum.

8. Convertisseur de tension selon une des revendications 1, 4 et 5, dans lequel ledit premier interrupteur et ledit deuxième interrupteur présentent un temps de commutation inférieur ou égal à 100 ns et de préférence intérieur ou égal à 10 ns.

9. Convertisseur de tension selon la revendication 8, dans lequel ledit premier interrupteur et ledit deuxième interrupteur sont réalisés en technologie GaN.

10. Convertisseur de tension selon l'une des revendications précédentes, dans lequel ledit premier interrupteur et ledit deuxième interrupteur comprennent une diode de roue libre.

11. Procédé de conversion d'une tension au moyen d'un convertisseur de tension continue de type Buck quasi-résonant, le convertisseur de tension comprenant une porte d'entrée ayant une première borne apte à recevoir un niveau de tension à convertir, une porte de sortie ayant une première borne apte à fournir un niveau de tension convertie, une ligne de masse connectant une deuxième borne de ladite porte d'entrée à une deuxième borne de ladite porte de sortie, un premier interrupteur connecté à ladite première borne de la porte d'entrée et un circuit de régulation présentant une borne d'entrée connectée à ladite première borne de la porte de sortie du convertisseur et une borne de sortie connectée à une borne de commande dudit premier interrupteur, ledit convertisseur comprenant en outre une inductance de résonance (Lr) connectée en série avec ledit premier interrupteur, ayant une première (214) et une deuxième borne, ladite première borne étant reliée audit premier interrupteur, une capacité de résonance (Cr), ayant une première et une deuxième borne, ladite première borne étant reliée à la deuxième borne (MP) de l'inductance de résonance, un deuxième interrupteur (Qls) relié d'une part à ladite première borne de la capacité de résonance et d'autre part à ladite deuxième borne de la capacité de résonance, ledit circuit de régulation comprenant un circuit comparateur de tension (213) configuré pour générer un signal d'activation (LS_cmd) du deuxième interrupteur (Qls) lorsque la tension entre la deuxième borne (MP) de l'inductance de résonance et la ligne de masse devient négative, et pour générer un signal d'ouverture du deuxième interrupteur (Qls) en correspondance de la génération du signal d'activation (HS_cmd) pilotant la fermeture dudit premier interrupteur, le procédé comportant les étapes de:
- génération d'une ondulation de tension, croissante pour un état fermé du premier interrupteur (Qhs) ou décroissante pour un état ouvert du premier interrupteur (Qhs) ;
- génération d'un signal de consigne proportionnel à une différence entre un niveau moyen de tension convertie et une tension de référence ;
- comparaison entre ledit signal de consigne et ledit niveau de tension convertie auquel a été additionné ladite ondulation de tension ; et en fonction du résultat de ladite première comparaison;
- si le niveau de tension convertie auquel a été additionné ladite ondulation de tension est inférieur ou égal au signal de consigne (Vcons), génération d'un signal d'activation pilotant la fermeture dudit premier interrupteur pendant une durée prédéfinie ;
- génération d'un signal de fermeture du deuxième interrupteur lorsque la tension entre la deuxième borne (MP) de l'inductance de résonance et la ligne de masse devient négative ; et
- génération d'un signal d'ouverture du deuxième interrupteur en correspondance de la génération du signal d'activation pilotant la fermeture dudit premier interrupteur.

## Patentansprüche

1. Gleichspannungswandler des quasi-resonanten Buck-Typs, der Folgendes umfasst: einen Eingangsport (201) mit einem ersten Anschluss (202), der einen umzuwandelnden Spannungspegel empfangen kann, einen Ausgangsport (206) mit einem ersten Anschluss (204), der einen Pegel einer umgewandelten Spannung liefern kann, eine Masseleitung, die einen zweiten Anschluss (203) des Eingangsports mit einem zweiten Anschluss (205) des Ausgangsports verbindet, einen ersten Schalter (Qhs), der mit dem ersten Anschluss des Eingangsports verbunden ist, und eine Regelschaltung (211) mit einem Eingangsanschluss (208), der mit dem ersten Anschluss des Ausgangsports des Wandlers verbunden ist, und einem Ausgangsanschluss (209), der mit einem Steueranschluss des ersten Schalters verbunden ist, wobei der Wandler ferner Folgendes umfasst: einen Resonanzinduktor (Lr), der in Reihe mit dem ersten Schalter geschaltet ist und einen ersten (214) und einen zweiten Anschluss aufweist, wobei der erste Anschluss mit dem ersten Schalter verbunden ist, einen Resonanzkondensator (Cr) mit einem ersten und einem zweiten Anschluss, wobei der erste Anschluss mit dem zweiten Anschluss (MP) des Resonanzinduktors verbunden ist, einen zweiten Schalter (Qls), der einerseits mit dem ersten Anschluss des Resonanzkondensators und andererseits mit dem zweiten Anschluss des Resonanzkondensators verbunden ist, wobei die Regelschaltung konfiguriert ist zum:
- Erzeugen einer Spannungswelligkeit (Ond.), die bei einem geschlossenen Zustand des ersten Schalters (Qhs) ansteigt und bei einem offenen Zustand des ersten Schalters (Qhs) abfällt;
- Erzeugen eines Sollwertsignals (Vcons) proportional zu einer Differenz zwischen einem mittleren Pegel der umgewandelten Spannung und einer Referenzspannung (Vref);
- Durchführen eines ersten Vergleichs (210) zwischen dem Sollwertsignal und dem Pegel der umgewandelten Spannung, zu dem die Spannungswelligkeit addiert wurde; und
- Erzeugen, wenn der Pegel der umgewandelten Spannung, zu dem die Spannungswelligkeit addiert wurde, kleiner oder gleich dem Sollwertsignal (Vcons) ist, eines Aktivierungssignals (HS_Cmd) an seinem Ausgang, das das Schließen des ersten Schalters für eine vordefinierte Zeitdauer (Ton) steuert,
**dadurch gekennzeichnet, dass** die Regelschaltung eine Spannungskomparatorschaltung (213) umfasst, konfiguriert zum Erzeugen eines Aktivierungssignals (LS_cmd) für den zweiten Schalter (Qls), wenn die Spannung zwischen dem zweiten Anschluss (MP) des Resonanzinduktors und der Masseleitung negativ wird, und zum Erzeugen eines Öffnungssignals für den zweiten Schalter (Qls) entsprechend der Erzeugung des Aktivierungssignals (HS_cmd), das das Schließen des ersten Schalters steuert.

2. Spannungswandler nach Anspruch 1, wobei:
- die Regelschaltung (211) ferner Folgendes umfasst:
- eine Steuerschaltung (207) mit einem Ausgang, der das Aktivierungssignal ausgeben kann; und
- eine Komparatorschaltung mit einem Ausgang, der das Ergebnis des Vergleichs ausgeben kann, wobei der Ausgang mit einem ersten Eingang der Steuerschaltung verbunden ist;
- die Regelschaltung ferner Folgendes umfasst:
- eine Welligkeitsaddierschaltung (Ond.Add.), konfiguriert zum Liefern des Pegels der umgewandelten Spannung, zu dem die Spannungswelligkeit addiert wurde, wobei die Welligkeitsaddierschaltung einen mit dem ersten Anschluss des Ausgangsports des Wandlers verbundenen ersten Eingang (208), einen mit einem Ausgang der Steuerschaltung verbundenen zweiten Eingang und einen mit einem ersten Eingang der Komparatorschaltung (210) verbundenen Ausgang aufweist;
- einen Fehlerverstärker (MEA), der das Sollwertsignal liefern kann, wobei der Verstärker einen mit dem ersten Anschluss des Ausgangsports des Wandlers verbundenen ersten Eingang, einen zum Empfangen der Referenzspannung konfigurierten zweiten Eingang und einen mit einem zweiten Eingang der Komparatorschaltung verbundenen Ausgang aufweist;
- die Steuerschaltung ferner konfiguriert ist zum Steuern:
- des Schließens oder Öffnens des ersten Schalters;
- des Erzeugens der ansteigenden oder abfallenden Spannung (Ond.) am zweiten Eingang der Welligkeitsaddierschaltung.

3. Spannungswandler nach einem der vorherigen Ansprüche, der auch ein Ausgangstiefpassfilter umfasst.

4. Spannungswandler nach einem der vorherigen Ansprüche, wobei die Regelschaltung eine Überlastungsschutzschaltung mit einer Schaltung zum Messen eines im zweiten Schalter fließenden Stroms und eine Komparatorschaltung (212) umfasst, die Folgendes aufweist:
- einen ersten Eingang für ein Signal eines vorbestimmten Begrenzungsstroms (Ilim);
- einen zweiten Eingang, der mit der Schaltung zum Messen des im zweiten Schalter fließenden Stroms verbunden ist;
wobei die Überlastungsschutzschaltung ferner einen Ausgang aufweist, der mit einem zweiten Eingang der Steuerschaltung verbunden ist; wobei die Steuerschaltung so konfiguriert ist, dass sie an ihrem Ausgang ein Signal (l_high) liefert, das von einem Vergleich zwischen dem ersten Eingang und dem zweiten Eingang abhängt und das Öffnen des ersten Schalters steuert, solange das Signal, das den im zweiten Schalter fließenden Strom repräsentiert, mindestens gleich dem Signal des vorbestimmten Begrenzungsstroms ist.

5. Spannungswandler nach Anspruch 4, wobei die Strommessschaltung einen Widerstand (Rsh) umfasst, der zwischen den zweiten Anschluss des Resonanzkondensators und die Masseleitung geschaltet ist.

6. Spannungswandler nach einem der vorherigen Ansprüche, der eine parallel zum ersten Schalter geschaltete Freilaufdiode mit einer mit dem ersten Anschluss des ersten Ports verbundenen Kathode aufweist, wobei die vordefinierte Zeitdauer (Ton) zum Öffnen des ersten Schalters, wenn der Strom durch den ersten Schalter in der Freilaufdiode fließt, gewählt ist.

7. Spannungswandler nach einem der Ansprüche 2, 4 und 5, wobei die Steuerschaltung so konfiguriert ist, dass sie den ersten Schalter für eine vorbestimmte Mindestdauer öffnet, um die maximale Betriebsfrequenz zu begrenzen.

8. Spannungswandler nach einem der Ansprüche 1, 4 und 5, wobei der erste Schalter und der zweite Schalter eine Schaltzeit von kleiner oder gleich 100 ns und vorzugsweise von kleiner oder gleich 10 ns aufweisen.

9. Spannungswandler nach Anspruch 8, wobei der erste Schalter und der zweite Schalter in GaN-Technologie ausgeführt sind.

10. Spannungswandler nach einem der vorherigen Ansprüche, wobei der erste Schalter und der zweite Schalter eine Freilaufdiode umfassen.

11. Verfahren zum Umwandeln einer Spannung mittels eines Gleichspannungswandlers des quasi-resonanten Buck-Typs, wobei der Spannungswandler Folgendes umfasst: einen Eingangsport mit einem ersten Anschluss, der einen Pegel einer umzuwandelnden Spannung empfangen kann, einen Ausgangsport mit einem ersten Anschluss, der einen Pegel einer umgewandelten Spannung liefern kann, eine Masseleitung, die einen zweiten Anschluss des Eingangsports mit einem zweiten Anschluss des Ausgangsports verbindet, einen ersten Schalter, der mit dem ersten Anschluss des Eingangsports verbunden ist, und eine Regelschaltung mit einem Eingangsanschluss, der mit dem ersten Anschluss des Ausgangsports des Wandlers verbunden ist, und einem Ausgangsanschluss, der mit einem Steueranschluss des ersten Schalters verbunden ist, wobei der Wandler ferner Folgendes umfasst: einen Resonanzinduktor (Lr), der in Reihe mit dem ersten Schalter geschaltet ist und einen ersten (214) und einen zweiten Anschluss aufweist, wobei der erste Anschluss mit dem ersten Schalter verbunden ist, einen Resonanzkondensator (Cr) mit einem ersten und einem zweiten Anschluss, wobei der erste Anschluss mit dem zweiten Anschluss (MP) des Resonanzinduktors verbunden ist, einen zweiten Schalter (Qls), der einerseits mit dem ersten Anschluss des Resonanzkondensators und andererseits mit dem zweiten Anschluss des Resonanzkondensators verbunden ist, wobei die Regelschaltung eine Spannungskomparatorschaltung (213) umfasst, konfiguriert zum Erzeugen eines Aktivierungssignals (LS_cmd) für den zweiten Schalter (Qls), wenn die Spannung zwischen dem zweiten Anschluss (MP) des Resonanzinduktors und der Masseleitung negativ wird, und zum Erzeugen eines Öffnungssignals für den zweiten Schalter (Qls) entsprechend der Erzeugung des Aktivierungssignals (HS_cmd), das das Schließen des ersten Schalters steuert, wobei das Verfahren die folgenden Schritte beinhaltet:
- Erzeugen einer Spannungswelligkeit, die bei einem geschlossenen Zustand des ersten Schalters (Qhs) ansteigt oder bei einem offenen Zustand des ersten Schalters (Qhs) abfällt;
- Erzeugen eines Sollwertsignals proportional zu einer Differenz zwischen einem mittleren Pegel der umgewandelten Spannung und einer Referenzspannung;
- Vergleichen zwischen dem Sollwertsignal und dem Pegel der umgewandelten Spannung, zu dem die Spannungswelligkeit addiert wurde; und in Abhängigkeit von dem Ergebnis des ersten Spannungsvergleichs;
- Erzeugen, wenn der Pegel der umgewandelten Spannung, zu dem die Spannungswelligkeit addiert wurde, kleiner oder gleich dem Sollwertsignal (Vcons) ist, eines Aktivierungssignals, das das Schließen des ersten Schalters für eine vordefinierte Zeitdauer steuert,
- Erzeugen eines Signals zum Schließen des zweiten Schalters, wenn die Spannung zwischen dem zweiten Anschluss (MP) des Resonanzinduktors und der Masseleitung negativ wird; und
- Erzeugen eines Signals zum Öffnen des zweiten Schalters entsprechend der Erzeugung des Aktivierungssignals, das das Schließen des ersten Schalters steuert.

## Claims

1. A DC voltage converter of the quasi-resonant Buck type comprising an input port (201) having a first terminal (202) able to receive a voltage level to be converted, an output port (206) having a first terminal (204) able to supply a converted voltage level, a ground line connecting a second terminal (203) of said input port to a second terminal (205) of said output port, a first switch (Qhs) connected to said first terminal of the input port and a regulation circuit (211) having an input terminal (208) connected to said first terminal of the output port of the converter and an output terminal (209) connected to a control terminal of said first switch, said converter further comprising a resonance inductor (Lr) connected in series with said first switch, having a first (214) and a second terminal, said first terminal being connected to said first switch, a resonance capacitor (Cr), having a first and a second terminal, said first terminal being connected to the second terminal (MP) of the resonance inductor, a second switch (Qls) connected, on the one hand, to said first terminal of the resonance capacitor and, on the other hand, to said second terminal of the resonance capacitor, said regulation circuit being configured to:
- generate a voltage ripple (Ond.), rising for a closed state of said first switch (Qhs) or falling for an open state of said first switch (Qhs);
- generate a setpoint signal (Vcons) proportional to a difference between an average level of converted voltage and a reference voltage (Vref);
- perform a first comparison (210) between said setpoint signal and said converted voltage level to which said voltage ripple has been added; and
- if the converted voltage level to which said voltage ripple has been added is lower than or equal to the setpoint signal (Vcons), generate an activation signal (HS_Cmd) on its output, controlling the closing of said first switch for a predefined period of time (Ton)
**characterised in that** said regulation circuit comprises a voltage comparator circuit (213) configured to generate an activation signal (LS_cmd) for the second switch (Qls) when the voltage between the second terminal (MP) of the resonance inductor and the ground line becomes negative, and to generate a signal for opening the second switch (Qls) in correspondence with the generation of the activation signal (HS_cmd) controlling the closing of said first switch.

2. The voltage converter according to claim 1, wherein:
- said regulation circuit (211) further comprises:
- a control circuit (207) having an output able to deliver said activation signal; and
- a comparator circuit having an output able to deliver said result of said comparison, said output being connected to a first input of said control circuit;
- said regulation circuit further comprises:
- an ripple adding circuit (Ond.Add.) configured to deliver said converted voltage level to which said voltage ripple has been added, the ripple adding circuit having a first input (208) connected to said first terminal of the output port of said converter, a second input connected to an output of said control circuit, and an output connected to a first input of said comparator circuit (210);
- an error amplifier (MEA) able to deliver said setpoint signal, said amplifier having a first input connected to said first terminal of the output port of said converter, a second input configured to receive said reference voltage, and an output connected to a second input of said comparator circuit;
- said control circuit is further configured to control:
- the closing or the opening of said first switch;
- the generation, on said second input of said ripple adding circuit, of said rising or falling voltage (Ond.).

3. The voltage converter according to one of the preceding claim, also comprising a low-pass output filter.

4. The voltage converter according to one of the preceding claims, wherein said regulation circuit comprises a circuit for protection against overloads comprising a circuit for measuring a current flowing in said second switch; and a comparator circuit (212) having:
- a first input for a predetermined limitation current signal (Ilim);
- a second input connected to said circuit for measuring the current flowing in said second switch;
said circuit for protection against overloads further having an output connected to a second input of said control circuit; said control circuit being configured to deliver, on its output, a signal (I_high) depending on a comparison between said first input and said second input and controlling the opening of said first switch for as long as said signal representative of the current flowing in said second switch is equal to at least said predetermined limitation current signal.

5. The voltage converter according to claim 4, wherein said current measurement circuit comprises a resistor (Rsh) connected between the second terminal of the resonance capacitor and said ground line.

6. The voltage converter according to one of the preceding claims, comprising a flywheel diode connected in parallel with said first switch, having a cathode connected to the first terminal of the first port, wherein said predefined period of time (Ton) is chosen for opening said first switch when the current flowing through said first switch flows in said flywheel diode.

7. The voltage converter according to one of claims 2, 4 and 5, wherein said control circuit is configured to open said first switch for a predetermined minimum duration in order to limit the maximum frequency of operation.

8. The voltage converter according to one of claims 1, 4 and 5, wherein said first switch and said second switch exhibit a switching time less than or equal to 100 ns and, preferably, less than or equal to 10 ns.

9. The voltage converter according to claim 8, wherein said first switch and said second switch are made of GaN technology.

10. The voltage converter according to one of the preceding claims, wherein said first switch and said second switch comprise a flywheel diode.

11. A method for conversion of a voltage by means of a DC voltage converter of the quasi-resonant Buck type, the voltage converter comprising an input port having a first terminal able to receive a voltage level to be converted, an output port having a first terminal able to supply a converted voltage level, a ground line connecting a second terminal of said input port to a second terminal of said output port, a first switch connected to said first terminal of the input port and a regulation circuit having an input terminal connected to said first terminal of the output port of the converter and an output terminal connected to a control terminal of said first switch, said converter further comprising a resonance inductor (Lr) connected in series with said first switch, having a first (214) and a second terminal, said first terminal being connected to said first switch, a resonance capacitor (Cr), having a first and a second terminal, said first terminal being connected to the second terminal (MP) of the resonance inductor, a second switch (Qls) connected, on the one hand, to said first terminal of the resonance capacitor and, on the other hand, to said second terminal of the resonance capacitor, said regulation circuit comprising a voltage comparator circuit (213) configured to generate an activation signal (LS_cmd) for the second switch (Qls) when the voltage between the second terminal (MP) of the resonance inductor and the ground line becomes negative, and to generate a signal for opening the second switch (Qls) in correspondence with the generation of the activation signal (HS_cmd) controlling the closing of said first switch, the method comprising the steps of:
- generating a voltage ripple, rising for a closed state of said first switch (Qhs) or falling for an open state of said first switch (Qhs);
- generating a setpoint signal proportional to a difference between an average level of converted voltage and a reference voltage;
- performing a comparison between said setpoint signal and said converted voltage level to which said voltage ripple has been added; and, depending on the result of said first comparison;
- if the converted voltage level to which said voltage ripple has been added is lower than or equal to the setpoint signal (Vcons), generating an activation signal controlling the closing of said first switch for a predefined period of time;
- generating a signal for closing the second switch when the voltage between the second terminal (MP) of the resonance inductor and the ground line becomes negative; and
- generating a signal for opening the second switch in correspondence with the generation of the activation signal controlling the closing of said first switch.
